Europäisches Patentamt

**European Patent Office**

**Office européen des brevets**

(11) Numéro de publication: **0 284 790 B1**

## FASCICULE DE BREVET EUROPEEN

(45) Date de publication de fascicule du brevet: **18.08.93** (51) Int. Cl.⁵: **A23L 1/22**, A23F 3/40, A24B 15/30, A23L 1/221

(21) Numéro de dépôt: **88102991.2**

(22) Date de dépôt: **29.02.88**

(54) **Composition comestible ou épice aromatisées.**

(30) Priorité: **26.03.87 CH 1153/87**

(43) Date de publication de la demande:
**05.10.88 Bulletin 88/40**

(45) Mention de la délivrance du brevet:
**18.08.93 Bulletin 93/33**

(84) Etats contractants désignés:
**CH DE FR GB LI NL SE**

(56) Documents cités:
**EP-A- 0 070 719**     **EP-A- 0 178 443**
**EP-A- 0 234 284**     **EP-A- 0 235 539**
**FR-A- 2 475 858**     **FR-A- 2 484 205**
**GB-A- 1 171 043**

(73) Titulaire: **FIRMENICH SA**
**1, route des Jeunes Case Postale 239**
**CH-1211 Genève 8(CH)**

(72) Inventeur: **Holzner, Günter**
**15, chemin des Palettes**
**CH-1212 Grand-Lancy(CH)**
Inventeur: **Kittner, Peter W.**
**22, chemin des Cyprès**
**CH-1226 Thonex(CH)**
Inventeur: **Blake, Anthony**
**17, chemin des Palettes**
**CH-1212 Grand-Lancy(CH)**

(74) Mandataire: **Salvadori, Giuseppe, Dr.**
**c/o Firmenich S.A. Case Postale 239**
**CH-1211 Genève 8 (CH)**

## Description

Au cours de la dernière décennie en particulier, le commerce de thés aromatisés a connu un essor considérable. Ce phénomène est dû en partie à l'attrait exercé sur le consommateur par les boissons non-traditionnelles à base de thé tels les thés solubles, les thés glacés, les différents mélanges liquides prêts à la consommation ou les boissons carbonatées offertes sous formes variées, en bouteilles, en boîtes ou en berlingots.

Or, la plupart de telles boissons sont enrichies à l'aide d'arômes naturels ou synthétiques. Traditionnellement, l'aromatisation du thé est effectuée au moyen de l'adjonction de certaines huiles essentielles, par exemple au moyen d'essence de jasmin ou de rose, d'épices telles le girofle, le cardamome ou la menthe, ou encore d'arômes de fruits, par exemple la fraise, la pêche, la banane ou le raisin.

D'autre part, c'est au cours des différentes étapes de maturation et de conditionnement que le thé acquiert son arôme caractéristique. Le flétrissage, l'enroulement des feuilles, la fermentation et le séchage sont autant d'opérations qui modifient le goût et l'arôme originaux du thé et qui déterminent, au même titre que la nature du sol et les conditions climatiques de l'endroit où la plante est cultivée, ses caractéristiques aromatiques.

Quoique des études systématiques n'aient pas été entreprises, il est également apparu à l'expérience que le stockage prolongé des feuilles de thé après fermentation avait pour effet d'en dénaturer l'arôme, d'où la nécessité de recourir à son aromatisation.

Celle-ci est généralement effectuée soit par simple giclement de l'arôme, en solution dans un solvant comestible inerte, sur les feuilles, soit par mélange des feuilles avec des particules solides renfermant l'arôme. Il s'agit dans ce cas de l'emploi de la technique de microencapsulation ou du procédé dit du lit fluidisé. Par exemple, la demande de brevet européen n° 70 719, publiée le 26 janvier 1983, décrit un procédé pour l'encapsulation de liquides volatiles dans lequel une émulsion du liquide volatile dans une solution d'un support est agglomérée dans un lit fluidisé par giclage de l'émulsion sur des particules du support ou du liquide déjà encapsulé fluidisées dans le lit.

De tels procédés présentent toutefois des inconvénients majeurs. D'une part, la méthode qui a recours au giclement d'une solution d'arôme s'est révélée peu efficace dans la mesure où l'arôme ainsi dispersé avait tendance à s'évaporer dans un laps de temps relativement court de la surface des feuilles traitées. D'autre part, la méthode qui consiste en l'utilisation de capsules solides aromatisées se montre d'un emploi peu aisé car il est apparu que, sous l'effet de la gravité, de telles particules ont tendance à se séparer de la masse des feuilles pour se déposer dans la partie inférieure du récipient dans lequel elles sont stockées ou transportées. Dans les deux cas, l'aromatisation s'en trouve déséquilibrée.

Nous avons maintenant découvert qu'il était possible de procéder à l'aromatisation du thé ou d'autres compositions comestibles ou épices, sous forme de feuilles, poudres ou particules, par un procédé simple qui consiste à mettre en contact une substance aromatisante volatile active non miscible à l'eau avec les feuilles, poudres ou particules de la composition ou épice, le contact étant obtenu par giclement direct sur leur surface exposée d'une émulsion obtenue par mélange de la substance aromatisante avec une solution aqueuse d'un support hydrosoluble filmogène en présence d'un agent émulsifiant.

La substance aromatisante volatile est d'abord retenue à la surface des feuilles, poudres ou particules de la composition ou épice par adhésion de l'émulsion grâce à l'effet de liaison exercée par la substance du support. Sous l'effet du séchage qui s'ensuit, et qui s'effectue par simple exposition graduelle de la composition ou épice ainsi traitées à l'air ou par l'emploi d'une source de chaleur, le cas échéant en appliquant une légère aspiration ou ventilation, la substance aromatisante est retenue sous forme de petites gouttelettes enrobées d'une couche protectrice hydrosoluble constituée par le support filmogène désormais sec.

Ainsi, la présente invention concerne un procédé pour l'aromatisation d'une composition comestible choisie parmi les produits pour infusions ou décoctions ou d'une épice, sous forme de feuilles, poudres ou particules, ou encore d'un support solide poreux la contenant, aromatisés à l'aide d'une émulsion aromatique contenant une substance aromatisante volatile active non miscible à l'eau, le procédé étant caractérisé en ce que ladite substance aromatisante est intimement mise en contact avec les feuilles, poudres ou particules de la composition ou épice, ou avec le support les contenant, par giclement direct sur leur surface exposée d'une émulsion aromatique constituée par

a. un support solide filmogène choisi parmi l'acétate de polyvinyle, l'alcool polyvinylique, les dextrines, l'amidon, naturel ou modifié, les protéines naturelles ou modifiées, les gommes végétales, les pectines, les xanthanes, la carboxyméthylcellulose, la méthylcellulose, l'hydroxyéthylcellulose et les lipohétérosaccharides, et

2

b. un agent émuisifiant choisi parmi les mono- ou diglycérides d'acides gras, les esters dérivés de la combinaison d'acides gras avec le sorbitol ou un saccharide, ou leurs dérivés alcoxylés, ou un ester de l'acide tartrique, citrique, ascorbique ou lactique, et

c. une substance aromatisante volatile active non miscible à l'eau.

Il s'agit en l'occurrence d'un procédé simple qui ne nécessite pas l'emploi d'un appareillage particulier, tel que pourrait l'être un atomiseur ou un mélangeur à lit fluidisé. L'opération a d'ailleurs lieu à température ambiante, ce qui se traduit par une économie d'énergie par rapport aux méthodes mentionnées. Dans la plupart des cas, il n'est même pas nécessaire de procéder au séchage du produit résultant, la quantité d'eau utilisée pour la préparation de l'émulsion étant absorbée presque entièrement par les feuilles, poudres ou particules, afin de les maintenir au taux d'humidité requis.

A titre de support filmogène hydrosoluble, on peut utiliser l'acétate de polyvinyle (PVA), l'alcool polyvinylique, des dextrines (naturelles ou modifiées), de l'amidon (naturel ou modifié), des gommes végétales, des protéines (naturelles ou modifiées), des alginates, des carragénanes, des pectines, des xanthanes ou des dérivés de la cellulose telles par exemple la carboxyméthylcellulose, la méthylcellulose ou l'hydroxyméthylcellulose. Il s'agit de composés qui peuvent être définis sous le terme générique de "gommes" [voir à cet effet la définition donnée dans Kirk-Othmer, Encyclopedia of Chemical Technology, 2ème édition, vol. 10, p. 741]. Nous trouvons donc sous ce terme des gommes naturelles, tels par exemple des extraits d'algues et la gomme arabique, et des gommes modifiées ou semi-synthétiques. Il s'agit de dérivés de la cellulose et de l'amidon ainsi que de gomme de fermentation microbienne, tels les lipohétéropolysaccharides, par exemple, les biopolymères connus sous le nom d'émulsans [voir demande de brevet européen n° 178 443, publiée le 23.04.86]. Ces supports hydrosolubles peuvent être employés séparément ou en mélange. A titre préférentiel, on utilise la gomme arabique, la gomme laque, les maltodextrines, l'amidon ou des protéines partiellement hydrolysées.

A titre d'agent émulsifiant, on peut utiliser des mono- ou diglycérides d'acides gras, des esters d'acides gras avec le sorbitol ou les saccharides, ou leurs dérivés alcoxylés, ou des esters d'acide tartrique, citrique, ascorbique ou lactique, ou encore des alginates et des pectines.

L'application de l'émulsion aromatique s'effectue par giclement et à cet effet on a recours à un gicleur, par exemple à air comprimé. On peut bien entendu varier la pression en fonction de la viscosité de l'émulsion, du débit désiré et du produit que l'on désire aromatiser. Une pression comprise entre 2 et 10 bar, de préférence de 3 à 5 bar, semble être parfaitement adaptée aux différents cas examinés.

Selon un mode préférentiel d'exécution, on utilise un gicleur du type Venturi à air comprimé à 4 bar, avec une buse d'air d'un diamètre de 4 à 8 mm, une buse d'aspiration du liquide de 0,6-0,9 mm et un débit d'émulsion de 10 à 40 g/minute.

L'application de l'émulsion sur le produit à traiter peut se faire en disposant le produit sur une surface plane, par exemple, en l'étalant sur une bande roulante ou dans un tambour rotatif, ce qui permet d'obtenir un enrobage très homogène.

Comme indiqué plus haut, l'eau apportée par le giclement de l'émulsion sur le produit est absorbée ou s'évapore rapidement à température ambiante, ce qui rend un séchage superflu. Si l'émulsion toutefois devait ajouter au produit des quantités d'eau indésirables, un séchage à l'étuve du produit traité à environ 40°C pendant 10 à 20 minutes pourrait s'avérer nécessaire.

Les proportions pondérales respectives des différents ingrédients de l'émulsion peuvent varier dans une gamme de valeurs assez étendue. De préférence, elles sont (en poids)

a. de 0,5 à 20 %, pour la substance aromatisante volatile active,

b. de 5 à 30 %, pour le support filmogène hydrosoluble,

c. de 0,1 à 10 %, pour l'agent émulsifiant, et

d. pour le restant d'eau.

L'application de l'émulsion selon l'invention présente des avantages certains par rapport aux méthodes connues d'aromatisation d'aliments, du thé en particulier.

Il s'agit en effet d'une méthode "directe" qui ne fait pas appel aux techniques d'encapsulation indirecte d'arôme connues dans l'art. Le procédé est donc plus économique. Comparé aux méthodes traditionnelles pratiquées dans l'industrie du thé, telle l'aspersion de l'arôme sous forme d'un sirop de sucre, le procédé de l'invention se révèle être plus efficace et plus fiable. La dispersion des constituants volatiles de l'arôme dans l'atmosphère environnante pendant l'opération de giclement est moindre, ce qui entraîne d'une part une moindre perte de l'arôme et d'autre part, une aromatisation plus équilibrée, le rapport respectif des différents constituants de l'arôme restant pratiquement constant pendant toute l'opération. Enfin, le thé ainsi aromatisé conserve pendant longtemps les propriétés organoleptiques acquises sans se dénaturer, l'arôme étant à l'abri des influences et agents extérieurs (telle l'évaporation ou l'oxydation) qui pourraient en modifier le caractère propre.

3

Le giclement de l'émulsion peut s'effectuer pendant n'importe quelle phase du traitement du thé, soit sur les feuilles, soit sur des coupes, de préférence toutefois avant l'emballage. Le procédé décrit convient également à l'aromatisation de supports poreux destinés à l'emballage de compositions comestibles ou d'épices, sous forme de feuilles, poudre ou particules, le procédé étant mis en oeuvre en traitant par giclement ou trempage lesdits supports à l'aide d'une émulsion aromatique telle que décrite plus haut. Un tel procédé convient parfaitement pour conférer des notes aromatisantes au papier destiné à l'emballage de thé en poudre ou des feuilles ou particules servant à la préparation d'infusions ou décoctions. Un tel procédé peut également servir à aromatiser du papier destiné à agir en tant que filtre, par exemple pour la préparation de boissons à base de café.

Quoique ce procédé trouve une application particulière pour l'aromatisation du thé, il peut s'appliquer parfaitement à d'autres compositions comestibles en feuilles, poudres ou particules dont, par exemple, la camomille, la verveine ou la menthe, ou à des épices.

A titre de substance aromatisante active, on peut employer les compositions aromatisantes généralement utilisées pour conférer, améliorer ou modifier le goût et l'arôme d'aliments, le thé en particulier. Le cas échéant, on peut bien entendu utiliser des substances aromatiques spécifiques isolées, telles les essences aromatisantes naturelles mentionnées plus haut dans la partie introductive. Parmi les substances volatiles utiles qui peuvent être employées à cet effet, il convient de mentionner celles décrites dans les ouvrages spécialisés tel S. Arctander, Perfume and Flavor Chemicals, Montclair, N.J. (1969), et Fenaroli's Handbook of Flavor Ingredients, 2nd edition, CRC Press, Cleveland, Ohio (1975). Leurs concentrations dans l'émulsion dépendent de la nature du produit à traiter, ainsi que de l'effet aromatique particulier que l'on recherche. Des concentrations de l'ordre de 0,5 à 20 % (parties en poids) par rapport au poids de la composition comestible ou épice aromatisées peuvent généralement être employées dans la plupart des cas pratiques examinés.

L'invention sera illustrée de manière plus détaillée mais non limitative par les exemples qui suivent.

Exemple 1

77 g d'une composition aromatisante de type fruité (Orange 55.597 T ; origine Firmenich SA, Genève) ont été émulsifiés avec la solution obtenue en mélangeant les ingrédients suivants (parties en poids) :

| | |
|---|---|
| Malto-dextrine [1] (Maltrin-Glucidex, marques enregistrées) | 225 |
| Manucol LF [2] | 5 |
| Eau déminéralisée | 770 |
| Total | 1000 |

1) un mélange 10 : 90 de malto-dextrines (origine : Roquette Frères, Beinheim, France et Grain Processing Corporation, Muscatine, Iowa, USA)
2) alginate de sodium (origine : Alginate Industries Ltd., Grande Bretagne).

La viscosité de ce mélange est de 72 cps 72 x 10$^{-3}$ kg/m x s.

130 g de l'émulsion aromatique ainsi obtenue ont été dispersés par giclement à l'aide d'un gicleur Venturi sur 1000 grammes de feuilles de thé (type Ceylan, origine : Migros, Genève). Les feuilles de thé aromatisées ont été ensuite conditionnées dans des sachets en papier, à raison de 1,6 g de thé par sachet. Ces derniers ont été emballés et maintenus à l'abri de la lumière à température ambiante pendant 7 mois.

Les boissons obtenues par infusion des sachets ainsi préparés possédaient un goût et un arôme plus marqué que ceux des boissons préparées à partir de thé conditionné en sachets fraîchement aromatisé à l'aide d'un sirop aromatique. Ce dernier a été préparé ainsi :

0,5 g de l'arôme orange 55.597 T, qui a servi à la préparation de l'émulsion aromatisante définie plus haut, ont été mélangés avec 6 grammes d'une solution à 65 % (65° Brix) de sucre dans de l'eau déminéralisée. Le mélange obtenu a été giclé de manière analogue à celle qui a été décrite précédemment sur 50 g de feuilles de thé de type Ceylan (origine : Migros, Genève).

De façon similaire on a procédé à l'aromatisation d'autres échantillons de thé au moyen des arômes suivants :

| Citron | 502. 142 T |
|--------|-----------|
| Framboise | 54.428 A |
| Fraise | 502.301 T |
| Canelle | 50.651 T |
| Pomme | 52.681 T |

Toutes ces compositions sont d'origine de Firmenich SA, Genève.

Dans tous les cas testés, les boissons obtenues à l'aide de thé aromatisé au moyen de l'émulsion aromatique préparées à l'aide du procédé de l'invention possédaient un arôme plus distinct que celui montré par les boissons préparées à partir du thé aromatisé au moyen d'un sirop aromatique et ce malgré un stockage prolongé (supérieur ou égal à 6 mois).

Exemple 2

7 g d'une composition aromatisante de type fruité (orange 55.597T ; origine Firmenich SA, Genève) ont été émulsifiés avec la solution obtenue en mélangeant les ingrédients suivants (parties en poids) :

| | |
|--------|------|
| Hydrocollan PP₄ 1) | 5,0 |
| Maltodextrine | 20,0 |
| Manucol F 2) | 0,5 |
| Eau déminéralisée | 74,8 |
| Total | 100,0 |

1) hydrolysate de collagène (origine : Friedrich Naumann, Memmingen, RFA)

2) Voir Exemple 1

10 g de l'émulsion ainsi obtenue ont été dispersés par giclement sur 90 g de feuilles de thé de type Ceylan (origine : Migros, Genève) selon la méthode décrite à l'Exemple 1. Les feuilles de thé aromatisées ont été ensuite conditionnées dans des sachets en papier à raison de 1,6 g de thé par sachet et ces derniers ont été emballés et maintenus à l'abri de la lumière à température ambiante pendant 7 mois.

Les boissons obtenues par infusion des sachets ainsi préparés possédaient un goût et un arôme distinct plus prononcés que ceux des boissons préparées à partir de thé conditionné en sachets identiques fraîchement aromatisé à l'aide d'un sirop de sucre aromatique (voir Exemple 1).

Exemple 3

L'émulsion aromatique préparée conformément à l'Exemple 2 a été dispersée directement sur des sachets en papier contenant 1,6 g de thé de type Ceylan (origine : Migros, Genève). Chaque sachet a été ainsi aromatisé avec env. 0,18 g d'émulsion, ce qui correspond à une teneur de 0,787 % d'arôme (calculé sur le contenu en thé).

Après emballage dans des récipients en carton et stockage pendant 6 mois à température ambiante, les sachets aromatisés ont servi à la préparation de boissons par infusion habituelle. Une évaluation organoleptique conduite par un panel d'experts a pu montrer que ces boissons possédaient un goût et un arôme marqués typique de l'arôme à l'orange utilisé.

Exemple 4

On a procédé comme indiqué à l'Exemple 2 mais en utilisant une composition aromatisante de type "menthe poivrée" (Peppermint Naefco ; origine : Firmenich SA, Genève). A l'aide de l'émulsion aromatique obtenue on a procédé à l'aromatisation de sachets en papier contenant 1,6 g de feuille de menthe (origine :

Migros, Genève). Après stockage dans les conditions définies à l'Exemple 3, les sachets ont servi à la préparation de boissons par simple infusion. Les boissons obtenues montraient un arôme prononcé et agréable de menthe, bien plus caractéristique que celui montré par des boissons obtenues à l'aide de sachets non aromatisés.

Des effets similaires, voire supérieurs, ont été observés en utilisant des sachets aromatisés par trempage dans l'émulsion aromatique suivie de séchage à l'air.

**Revendications**

1. Procédé pour l'aromatisation d'une composition comestible- choisie parmi les produits pour infusions ou décoctions ou d'une épice, sous forme de feuilles, poudres ou particules, ou encore d'un support solide poreux la contenant, aromatisés à l'aide d'une émulsion aromatique contenant une substance aromatisante volatile active non-miscible à l'eau, le procédé étant caractérisé en ce que ladite substance aromatisante est intimement mise en contact avec les feuilles, poudres ou particules de la composition ou épice, ou avec le support les contenant, par giclement direct sur leur surface exposée d'une émulsion aromatique constituée par

    a. un support solide filmogène choisi parmi l'acétate de polyvinyle, l'alcool polyvinylique, les dextrines, l'amidon, naturel ou modifié, les protéines naturelles ou modifiées, les gommes végétales, les pectines, les xanthanes, la carboxyméthylcellulose, la méthylcellulose, l'hydroxyéthylcellulose et les lipohétérosaccharides, et

    b. un agent émulsifiant choisi parmi les mono- ou diglycérides d'acides gras, les esters dérivés de la combinaison d'acides gras avec le sorbitol ou un saccharide, ou leurs dérivés alcoxylés, ou un ester de l'acide tartrique, citrique, ascorbique ou lactique et

    c. une substance aromatisante volatile active non-miscible à l'eau.

2. Procédé selon la revendication 1, caractérisé en ce que l'émulsion aromatique est constituée par

    a. 5 à 30% de support solide filmogène,

    b. 0,1 à 10% d'agent émulsifiant,

    c. 0,5 à 20% de substance aromatisante volatile active, le restant étant représenté par de l'eau.

3. Procédé selon la revendication 1, caractérisé en ce que la composition comestible est choisie parmi le thé, la camomille, la verveine et la menthe.

4. Composition choisie parmi les produits pour infusions ou décoctions, sous forme de feuilles, poudres ou particules, susceptible d'être obtenue par le procédé selon la revendication 1 ou 2.

5. Composition selon la revendication 4, choisie parmi le thé, la camomille, la verveine et la menthe.

6. Support solide poreux, destiné à l'emballage d'une composition choisie parmi les produits pour infusions ou décoctions, sous forme de feuilles, poudres ou particules, susceptible d'être obtenu par le procédé selon la revendication 1 ou 2.

**Claims**

1. Process for flavouring an edible composition chosen from among the products for infusion or decoction, or a spice, in the form of leaves, powders or particles, or yet a porous solid support containing it, flavoured by means of a flavouring emulsion containing an active volatile flavouring substance non-miscible with water, the process being characterised in that said flavouring substance is intimately mixed in contact with the leaves, powders or particles of the composition or spice, or with the support containing them, by directly spraying their exposed surface with a flavouring emulsion consisting of:

    a. a solid film-building carrier chosen from among polyvinyl acetate, polyvinyl alcohol, dextrins, natural or modified starch, natural or modified proteins, vegetable gums, pectins, xanthanes, carboxymethyl cellulose, methyl cellulose, hydroxyethyl cellulose and lipoheterosaccharides, and

    b. an emulsifying agent chosen from among fatty-acid mono- or diglycerides, esters derived from the combination of fatty acids with sorbitol or a saccharide, or their alkoxylated derivatives, or an ester of tartaric, citric, ascorbic or lactic add and

    c. an active volatile flavouring substance non-miscible with water.

2. Process according to claim 1, characterized in that the flavouring emulsion consists of
   a. 5 to 30% of solid film-building carrier,
   b. 0.1 to 10% emulsifying agent, and
   c. 0.5 to 20% active volatile flavouring substance,
   the remainder being water.

3. Process according to claim 1, characterized in that the edible composition is chosen from among tea, camomile, verbena and mint.

4. Composition chosen from among the products for infusions or decoctions, in the form of leaves, powders or particles, susceptible of being obtained by the process according to claim 1 or 2.

5. Composition according to claim 4, chosen from among tea, camomile, verbena and mint.

6. Porous solid support, intended for packaging of a composition chosen from among the products for infusions or decoctions in the form of leaves, powders or particles, susceptible of being obtained by the process according to claim 1 or 2.

**Patentansprüche**

1. Verfahren zur Aromatisierung einer Speisekomposition, ausgewählt unter Infusions- oder Absudsprodukten, oder einer Würze, in Form von Blättchen, Pulvern oder Teilchen, oder weiters von einem sie enthaltenden porösen festen Träger, welche mittels einer Geschmacksstoffemulsion, die einen flüchtigen aktiven wasserunmischbaren Geschmacksstoff enthält, aromatisiert sind, dadurch gekennzeichnet, daß der obengenannte Geschmacksstoff mit der exponierten Oberfläche der Blättchen, Pulver oder Teilchen der Komposition oder der Würze, oder des sie enthaltenden Trägers, durch direktes Aufsprühen einer Geschmacksstoffemulsion, in engen Kontakt gebracht ist, welche aus
   a. einem festen, filmbildenden Träger, unter Polyvinylacetat, Polyvinylalkohol, Dextrinen, natürlicher oder modifizierter Stärke, natürlichen oder modifizierten Proteinen, Pflanzenhydrokolloiden, Pektinen, Xanthanen, Carboxymethylzellulose, Methylzellulose, Hydroxyethylzellulose und Lipoheterosacchariden ausgewählt, und
   b. einem Emulgator, unter Fettsäure-mono- oder -diglyceriden, unter Estern, die aus der Verbindung von Fettsäure mit Sorbitol oder einem Saccharid gebildet werden, oder ihren Alkoxyderivaten, oder unter Weinsäure-, Zitronensäure-, Ascorbinsäure oder Milchsäureester ausgewählt, und
   c. einem flüchtigen aktiven wasserunmischbaren Geschmacksstoff, besteht.

2. Verfahren gemäß Anspruch 1, dadurch gekennzeichnet, daß die Geschmacksstoffemulsion aus
   a. 5 bis 30% des festen filmbildenden Trägers,
   b. 0,1 bis 10% des Emulgators,
   c. 0,5 bis 20% des flüchtigen aktiven Geschmacksstoffs und der Rest aus Wasser,
   besteht.

3. Verfahren gemäß Anspruch 1, dadurch gekennzeichnet, daß die Speisekomposition unter Tee, Kamille, Eisenkraut und Minze ausgewählt wird.

4. Komposition, die unter den Infusions- oder Absudsprodukten in Form von Blättchen, Pulvern oder Teilchen ausgewählt wird, welche mittels des Verfahrens gemäß Anspruch 1 oder 2 hergestellt sein kann.

5. Komposition gemäß Anspruch 4, die unter Tee, Kamille, Eisenkraut und Minze ausgewählt wird.

6. Poröser fester Träger, für die Verpackung einer unter Infusions- oder Absudsprodukten ausgewählten Komposition in Form von Blättchen, Pulvern oder Teilchen, welcher mittels des Verfahrens gemäß Anspruch 1 oder 2 hergestellt sein kann.